# EUROPEAN PATENT APPLICATION

(11) **EP 4 282 674 A1**
(43) Date of publication of application: **29.11.2023**
(21) Application number: 22175268.6
(22) Date of filing: 24.05.2022
(51) Int. Cl.: B60H 1/00

(54) **HEATING, VENTILATING AND/OR AIR CONDITIONING SYSTEM FOR VEHICLE**

(71) Applicant: VALEO SYSTEMES THERMIQUES, 78320 Le Mesnil Saint-Denis (FR)
(72) Inventor: GAERTNER, Stefan, 96476 Bad Rodach (DE); PIERRES, Philippe, 78320 Le Mesnil-Saint-Denis (FR); VARELA SANTOYO, Nestor Ismaël, 50200 Toluca (MX)
(74) Representative: Valeo Systèmes Thermiques

(57) **Abstract**

The present invention concerns a heating, ventilating and/or air-conditioning system for a vehicle, comprising at least an air inlet and two air outlets, a heat exchanger, a mixing area, a flap (16) located between the air inlet and the mixing area and configured to control the circulation of the cold part of the air flow toward the mixing area, a baffle (32) located through the mixing area (14), the baffle (32) comprising at least channels (34) extending between the heating heat exchanger and a first air outlet, the channels (34) participate to delimit at least a conduit extending toward a second air outlet, the channels (34) comprising a front face (36) facing the flap (16), the baffle (32) comprising at least a deflector (44) extending toward the flap (16), the deflector (44) comprising a free edge (46) located between the flap (16) and the front face (36) of the channels (34), the deflector (44) participating to delimit a canal (60) that guides a portion (63) of the second part of the air flow, said portion (63) of the second part of the air flow being directed toward the second air outlet (10).

## Description

The invention relates to a heating, ventilating and/or air conditioning system for vehicle, and more particularly to a heating, ventilating and/or air conditioning system for a thermal regulation of a cabin and/or a windshield of a car.

The heating, ventilation and/or air conditioning systems usually comprise at least two heat exchangers, one of which is a first heat exchanger designed to cool an air flow and a second heat exchanger designed to heat the air flow, the heat exchangers regulating the temperature of the air flow passing through said device, said air flow exiting through different air outlets directed toward different zones of the cabin compartment. The various zones of this compartment are, for example, a front zone dedicating to the face of a driver, a foot zone dedicated to the foot of the driver, and/or a window zone comprising for instance the windshield. The temperature of the air flow circulating toward each zone may be different according of the needed of the zone.

When a defrost and/or demister of the windshield is needed, the heating, ventilating and/or air-conditioning system thermally regulates and forces the circulation of a part of the air flow toward the windshield. This part of the air flow is for instance at a higher temperature than a desired temperature by the driver, and notably for his/her face.

Traditionally, the heating, ventilating and/or air-conditioning system comprises a housing in which are located the heat exchangers and several flaps moving in at least two positions to form a path of the air flow through the said heating, ventilating and/or air-conditioning system. The flaps are located through the passage of the cold air flow and/or heat air flow from one of the heat exchangers and guide them toward one or more air outlet of the heating, ventilating and/or air-conditioning system.

It is known that the heating, ventilating and/or air-conditioning system comprises a mixing area wherein heat air flow and/or cold air flow circulates merge before going to one or more air outlets. The heating, ventilating and/or air-conditioning system may comprise also a baffle installed through the mixing area. The baffle comprises several channels and conduits respectively configured, for instance, to guide the heat air flow toward the air outlet located near the windshield and the cold air flow toward the air outlet located near the face of passenger car. Such a baffle is able to manage a temperature differential but, in some situations, such a baffle is not enough to manage the thermo-regulation of a specific system. This configuration causes temperature differentials between the different air outlets that are too high or too low, and this is unsatisfactory.

The present invention fits into this context by providing a heating, ventilating and/or air-conditioning system in which the temperature differentials is better managed while using few flaps.

In this context, the present invention is covering a heating, ventilating and/or air conditioning system for a vehicle adapted for a circulation of an air flow, comprising at least an air inlet and two air outlets, a heat exchanger configured to exchange heat between at least a first part of the air flow and a fluid, a mixing area configured to mix the first part of the air flow with a second part of the air flow and located between the air inlet and the air outlets, a flap located between the air inlet and the mixing area and configured to control the circulation of the second part of the air flow toward the mixing area, the heating, ventilating and/or air conditioning system comprising a baffle located through the mixing area, the baffle comprising at least channels extending between the heat exchanger and a first air outlet, the channels participate to delimit at least a conduit extending toward a second air outlet, the channels comprising a front face facing the flap, the baffle comprising at least a deflector extending toward the flap, the deflector comprising a free edge located between the flap and the front face of the channel, the deflector (44) participating to delimit a canal that guides a portion of the second part of the air flow, said portion of the second part of the air flow being directed toward the second air outlet.

In other words, a first dimension measured between the front face of the channels and an end of the flap is larger than a second dimension measured between the front face boarding the channels and the free edge of the deflector, each dimension being measured along parallel direction.

First part of the air flow is the hot air circuit and the second part of the air flow is the cold air circuit.

Said invention allows the cold air to join a lower area of the heating, ventilating and/or air-conditioning system via the canal 60, to adjust temperature stratification of the heating, ventilating and/or air-conditioning system.

The heating, ventilating and/or air-conditioning system comprises a housing that receives the components of the heating, ventilating and/or air-conditioning system and in particular the air inlet, the air outlets, the heat exchanger(s), the flap(s) and the baffle(s), this list being non-exhaustive. The heating, ventilating and/or air-conditioning system is configured to force the air flow to circulate through the said heating, ventilating and/or air-conditioning system from the air inlet to the air outlets through at least the heat exchanger.

To force the circulation of the air flow through the heating, ventilating and/or air-conditioning system, the last one comprises a blower device installed upstream the above-mentioned components according to the air flow circulation.

The air flow is divided in at least two parts, the first part circulating through the heat exchanger and the second part circulating around said heat exchanger. The first part of the air flow and the second part of the air flow is then mixed into the mixing area. The baffle, installed inside the mixing area, participates to guide, at least partially, the first part of the air flow to the first air outlet and the second part of the air flow to the second air outlet. The second air flow, i.e. the cold one, is separated in two portions : a first portion flowing above the deflector and in between the channels and a second portion that is flowing inside the canal. This configuration optimizes the thermal regulation of the air flow at the first and the second air outlets.

Furthermore, the deflector of the baffle forces the circulation of the second part of the air flow around an end of the heat exchanger, and more precisely, toward a zone wherein the first part of the air flow circulating downstream the heat exchanger. It is understood that the second part of the air flow guided by the deflector is at least partially mixed with the first part of the air flow, regulating the temperature of each part of the air flow. The deflector is designed to catch a cold air flow earlier than the channels of the baffle and to drive this cold air flow as a layer in an area of the mixing zone that is downstream of said channel. The deflector is able to isolate a part of the cold air flow that is crossing the baffle from the second part of the air flow.

According to an optional characteristic of the invention, the baffle comprises a support extending in a first plane starting from the front face of the channels and toward the flap, the deflector extending in a second plane distinct from the first plane.

According to an optional characteristic of the invention, the first plane is parallel to the second plane.

According to an optional characteristic of the invention, the support takes a complementary shape of a wall of the housing. This wall is a shared wall that defines the first part of the air flow, that is to say the heat air circuit, as well the second part of the air flow that bypath the heat exchanger, which is here a cold air circuit.

According to an optional characteristic of the invention, the support comprises a first wall extending in the first plane and a second wall extending in another plane secant to the first plane, each plane being parallel to a main extension axis of the support, the main extension axis of the support corresponding the biggest dimension of the support.

According to another optional characteristic of the invention, the support is dedicated to position the baffle with respect to the flap.

According to another optional characteristic of the invention, the deflector comprises at least a proximal portion and a distal portion extending in secant planes.

According to another optional characteristic of the invention, the planes in which respectively extend the proximal portion and the distal portion are parallel to a main extending axis of the deflector.

According to another optional characteristic of the invention, the planes, in which respectively extend the portions of the deflector, form an angle whose value is between -10° and +10°.

According to another optional characteristic of the invention, the deflector comprises a curve profile. The curve profile is more particularly shown in a section of the deflector perpendicular to the main extending axis of said deflector, the main extending axis of the deflector corresponding to the biggest dimension of the deflector.

According to another optional characteristic of the invention, a dimension measured between the free edge of the deflector and a free edge of the flap is between 2 and 10 mm. This dimension is the minimal one, that is to say when the free edge of the deflector and a free edge of the flap are facing each other.

According to another optional characteristic of the invention, the baffle comprises a wall participating at least in part to delimit the canal with the deflector, said wall extending in a first plane, the proximal portion of said deflector extending in a second plane, the first plane and the second plane form an angle being between -5° and +5°.

According to another optional characteristic of the invention, the channels present a proximal opening located next to the heat exchanger and a distal opening located next to the first outlet, the deflector being located closer to the proximal opening than to the distal opening.

According to another optional characteristic of the invention, the channels comprise a closed section between its proximal opening and its distal opening.

According to another optional characteristic of the invention, the heat exchanger is a first heat exchanger configured to heat the air flow, the heating, ventilating and/or air conditioning system comprising a second heat exchanger configured to cool the air flow.

According to another optional characteristic of the invention, the heating, ventilating and/or air conditioning system comprises a heat air circuit through which the first heat exchanger is located and a cold air circuit through which the flap is located and that surrounds the first heat exchanger, the heat air circuit and the cold air circuit comprising a shared wall, the deflector participating with the shared wall to delimit the canal configured to guide the second part of the air flow passing through the cold air circuit toward the second outlet.

According to another optional characteristic of the invention, the baffle comprises several channels located one after the other along the principal extending direction of the baffle, the channels participating to delimit several conduits.

According to another optional characteristic of the invention, the heating, ventilating and/or air-conditioning system comprises at least two baffles symmetrical to each other with respect to a partition wall located in the housing of the heating, ventilating and/or air-conditioning system.

According to a characteristic of the invention, the deflector comprises a free extremity which is in a common line with the front face of the channels.

According to another optional characteristic of the invention, the deflector comprises a free extremity located between the channels.

The present invention concerns also a vehicle comprising a cabin, a windshield and the heating, ventilating and/or air conditioning system according to any of the preceding characteristics, the first outlet of the heating, ventilating and/or air conditioning system being dedicated to the windshield and the second outlet of the heating, ventilating and/or air conditioning system being dedicated to the face of passenger compartment.

Other characteristics, details and advantages of the invention will become clearer while reading the following description, on the one hand, and several examples of realisation given as an indication and without limitation with reference to the schematic drawings annexed, on the other hand, on which:
[fig. 1] is a section view of a heating, ventilating and/or air-conditioning system according to the invention comprising at least a baffle;
[fig. 2] is the section view of a heating, ventilating and/or air-conditioning system according to figure 1 where the circulation of an air flow through the said heating, ventilating and/or air-conditioning system is represented;
[fig. 3] is ta perspective representation of the baffle according to figure 1;
[fig. 4] is a transversal section of the baffle according to figure 1;
[fig. 5] is bottom view of a perspective representation of the baffle according to figure 1.

The characteristics, variants and different modes of realization of the invention may be associated with each other in various combinations, in so far as they are not incompatible or exclusive with each other. In particular, variants of the invention comprising only a selection of features separately described from other features may be imagined, if this selection of features is enough to confer a technical advantage and/or to differentiate the invention over the prior art.

In the following description, the designations "longitudinal", "traversal" and "vertical" refer to the orientation of a heating, ventilating and/or air-conditioning system according to the invention. A longitudinal direction corresponds to a main direction of extension of a support of a baffle of the heating, ventilating and/or air-conditioning system, this longitudinal direction being parallel to a longitudinal axis L of a marker L, V, T shown in the figures. A transversal direction corresponds to a perpendicular direction of a main extension plane of a heat exchanger of the heating, ventilating and/or air-conditioning system, for example, this transversal direction being parallel to a transverse axis T of a marker L, V, T, and perpendicular to the longitudinal axis L. Finally, a vertical direction corresponds to a vertical axis V of a marker L, V, T, the vertical axis V being perpendicular to the longitudinal axis L and the transversal axis T.

Furthermore, the terms "upstream" and "downstream" used in the following description refer to the circulation of an air flow through the heating, ventilating and/or air-conditioning system.

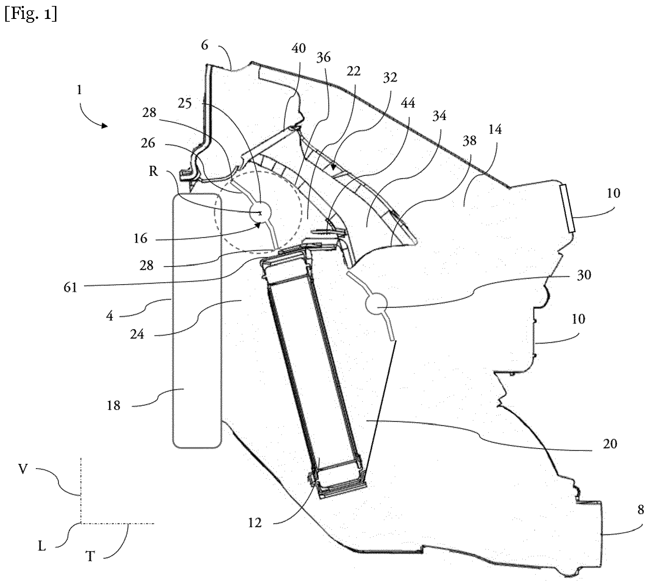

The figure 1 shows a heating, ventilating and/or air-conditioning system 1 according to the invention, and more particularly a section of the heating, ventilating and/or air-conditioning system 1 according to a plane parallel to the transversal direction T and to the vertical direction V. The heating, ventilating and/or air-conditioning system 1 forces the circulation of an air flow through toward a vehicle cabin and thermally regulates said air flow.

The heating, ventilating and/or air-conditioning system 1 is configured to be installed in a vehicle, the last one comprising at least a cabin, wherein the driver and the passengers can be installed. Such a cabin is also delimited by a windshield located in front of the driver. The air flow circulated and thermally regulated by the heating, ventilating and/or air-conditioning system 1 is destined to circulate towards the car cabin and/or the windshield. It is understood that the heating, ventilating and/or air-conditioning system 1 distributes the air flow to different zones of the vehicle, and, for instance, distributes the air flow near the windshield to defrost or demist it, into the cabin to thermally regulate the air sent to the driver and/or to the passenger, or also in direction of the foot of the driver to optimise his comfort.

The heating, ventilating and/or air-conditioning system 1 comprises at least a housing 2 that receives the components of said heating, ventilating and/or air-conditioning system 1, and wherein the air flow circulates to the windshield and/or the cabin. In that aspect, the heating, ventilating and/or air-conditioning system 1 comprises at least an air inlet 4 and two air outlets 6, 8, 10, the air inlet 4 being fluidly connected to the exterior environment of the cabin whereas the air outlets 6, 8, 10 communicate with the cabin.

As shown in figure 1, the heating, ventilating and/or air-conditioning system 1 comprises at least a first air outlet 6 opened in the cabin near the windshield of the vehicle and a second air outlet 10 opened to the face of the driver and/or towards the passengers, in the car cabin. Advantageously, the heating, ventilating and/or air-conditioning system 1 comprises other air outlets 8 distributing the air flow to other zones of the car cabin, like towards the foot of the driver.

It is understood that the air flow circulates through the housing 2 from the air inlet 4 to the air outlets 6, 8, 10 and through at least one component of the heating, ventilating and/or air-conditioning system 1.

Advantageously, the heating, ventilating and/or air-conditioning system 1 comprises a blower device forcing the air flow circulation through the housing 2 of the heating, ventilating and/or air-conditioning system 1. The blower device is at the origin of the generation of the air flow circulating through the heating, ventilating and/or air-conditioning system 1 to the cabin by aspirating air from the exterior or interior environment of the vehicle.

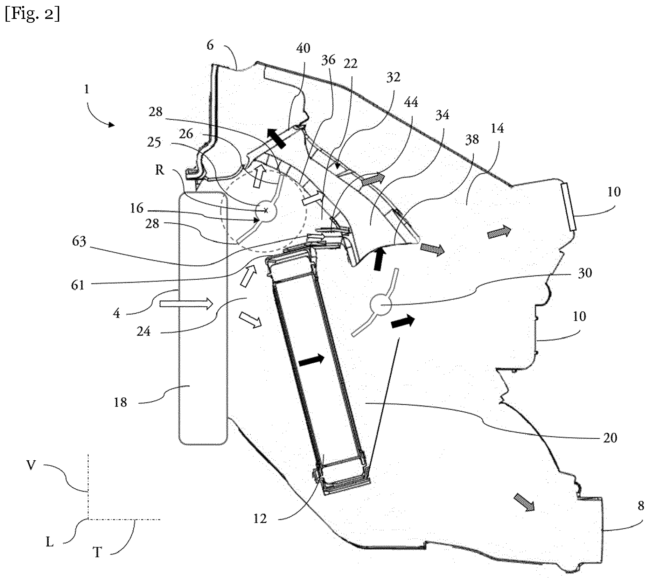

The circulation of the air flow through the heating, ventilating and/or air-conditioning system 1, and through each component of the heating, ventilating and/or air-conditioning system 1, is represented on the figure 2, the empty arrows representing the cold air flow, the full arrows representing the heated air flow and the striped arrows representing the mixing air flow.

The heating, ventilating and/or air-conditioning system 1 comprises several components and at least a heat exchanger 12 configured to exchange heat between at least a first part of the air flow and a fluid, a mixing area 14 configured to mix a first part of the air flow with a second part of the air flow and located between the air inlet 4 and the air outlets 6, 8, 10 a flap 16 located between the air inlet 4 and the mixing area 14 and configured to control the circulation of the second part of the air flow toward the mixing area 14.

The heat exchanger 12 is configured to heat the air flow circulating through it. In other words, the air flow, when it circulates through the heat exchanger 12, is heated by a thermal exchange with the fluid circulating inside the heat exchanger 12.

Preferentially, the heating, ventilating and/or air-conditioning system 1 comprises a first heat exchanger 12 configured to heat at least in part the air flow and a second heat exchanger 18 configured to cool at least in part the air flow. The second heat exchanger 18 is located between the first heat exchanger 12 and the air inlet 4, along a transversal direction T. It is understood that the second heat exchanger 18 is located upstream of the first heat exchanger 12, at least a part of the air flow circulating in first through the second heat exchanger 18 and then through the first heat exchanger 12.

Advantageously, the air flow circulates through the second heat exchanger 18, wherein the air flow is cooled, and then, a part of this cold air flow circulating through the first heat exchanger 12 is heated.

As it is shown in figure 1 or 2, the housing of the heating, ventilating and/or air-conditioning system 1 comprises a heat air circuit 20 through which the first heat exchanger 12 is located and a cold air circuit 22 through which the flap 16 is located, such cold air circuit surrounding the first heat exchanger 12. The heating, ventilating and/or air-conditioning system 1 comprises a bifurcation area 24 and the mixing area 14, the heat air circuit 20 and the cold air circuit 22 extending between the bifurcation area 24 and the mixing area 14. The mixing area 14 is at least partially delimited by the housing 2, an outlet of the heat air circuit 20, an outlet of the cold air circuit 22 and the air outlets 6, 8, 10 of the housing 2. The bifurcation area 24 corresponds to the space wherein the air flow is divided in two parts, a first part of the air flow circulating then to the mixing area 14 through the heat air circuit 20, whereas a second part of the air flow circulating directly to the mixing area 14 without passing through the first heat exchanger 12. The mixing area 14 corresponds to the space where at least partially the first part of the air flow and the second part of the air flow are mixed before circulating to the air outlets 6, 8, 10. The heat air circuit 20 and the cold air circuit 22 are separated by the first heat exchanger 12, but they are also separated by a shared wall 61 that is a wall of the housing 2. This wall 61 is shared between heat air circuit 20 and the cold air circuit 22 and this shared wall is maintaining the position of the first heat exchanger 12 inside the housing 2.

The flap 16 is installed through the cold air circuit 22 and is movable between at least an opened position, shown in figure 1, and a closed position, shown in figure 2, and all positions between the opened position and the closed position. The air flow can circulate through the cold air circuit 22 when the flap 16 is in the opened position. However, when the flap 16 is in the closed position, it blocks the circulation of the air flow through the cold air circuit 22, the air flow having to circulate to the mixing area 14 through the heat air circuit 20.

The flap 16 comprises a cylindric body 25 from which extends two panes 26 opposite each other's. The cylindric body is rotatably mounted around a rotational axis R, the flap 16 passing from the opened position to the closed position, and inversely, by rotating around the rotational axis R. Each pane 26 of the flap 16 presents a free end 28 being part of a cercle participating to delimit a circumferential movement of the flap 16.

Similarly, the heating, ventilating and/or air-conditioning system may comprise another flap 30 disposed at the outlet of the heat air circuit 20, and stop or allow the circulation of the heated air flow to the mixing area 14. Flap 16 and flap 30 are mixing flaps.

According to the invention, the heating, ventilating and/or air-conditioning system 1 comprises a baffle 32 located inside the mixing area 14. It is understood by "baffle 32" a complex structure guiding at least partially the first part of the air flow to the first air outlet 6 and the second part of the air flow to the second air outlet 10.

The baffle 32 comprises at least channels 34 extending between the heat exchanger 12 and the first air outlet 6, the channels 34 participate to delimit at least a conduit 42 extending toward the second air outlet 10, the channels 34 comprising a front face 36 extending in relation to the flap 16.

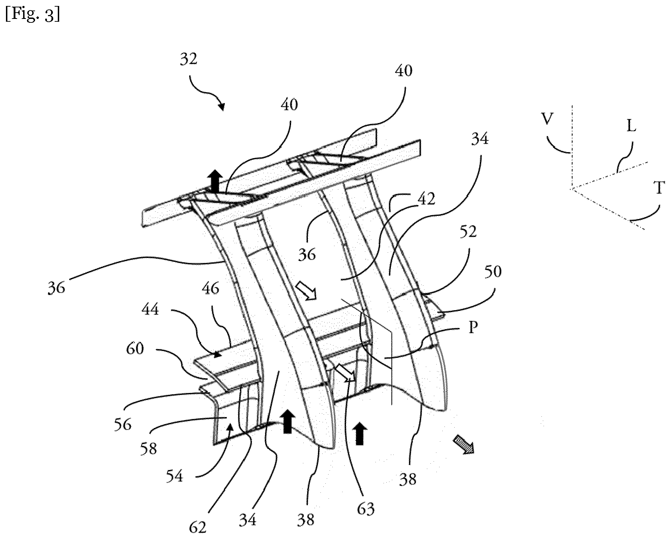

As shown in figure 3, the channels 34 comprise a proximal opening 38 next to the outlet of the heat air circuit 20 and a distal opening 40 next to the first air outlet 6, at least a part of the heated air flow circulating through the channels 34 from the proximal opening 38 to the distal opening 40. This disposition of the openings 34, 40 optimizes the caption of the heated air flow to guide it towards the first air outlet 6.

The channels 34 take a closed shape between the proximal opening 38 to the distal opening 40. More particularly, the channels 34 present an oblong section shown in a plane perpendicular to a main extending direction of the channels 34.

The conduit 42 is more precisely delimited by an external face of the channels 34 and an internal face of the housing 2. The conduit 42 extends from the cold air circuit 22 to the mixing area 14. It is understood that the second part of the air flow circulates from the bifurcation area 24 to the mixing area 14 through the cold air circuit 22 and then through the conduit 42.

The second part of the air flow collides with the front face 36 of the channels 34 when it circulates through the cold air circuit 22, from the bifurcation area 24 to the mixing area 14.

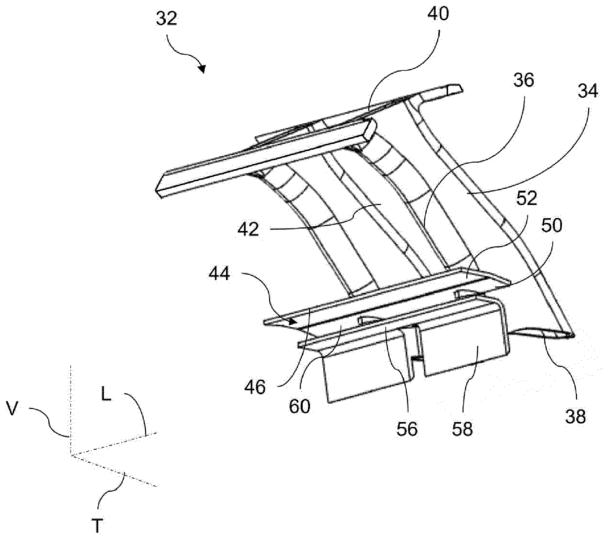

Advantageously and as shown in figure 3 and 5, the baffle 32 comprises several channels 34 located one after the others along the principal extending direction of the baffle 32, the channels 34 participating to delimit several conduits 42. More particularly, the baffle 32 comprises two channels 34 and three conduits 42, each channel 34 participating to delimit at least partially two conduits 42. The channels 34 are similar and disposed next to each other.

According to the invention, the baffle 32 comprising at least a deflector 44 that may begin at the front face 36 of the channels 34 and is extending toward the flap 16, said deflector 44 comprising a free edge 46 located between the flap 16 and the front face 36 of the channels 34, as shown in figure 1, 2 and 4, and a free extremity 62 located in the plan of the front face 36 or in between two adjacent channels 34. It is understood that the free edge 46 is located outside of the circle in which the free ends 28 of the flap 16 rotate. This clever arrangement of the deflector 44 optimizes the caption of a portion 63 of the second part of the air flow, that is to say the cold one, in order to guide it to the mixing area 14 and to the second air outlet 10.

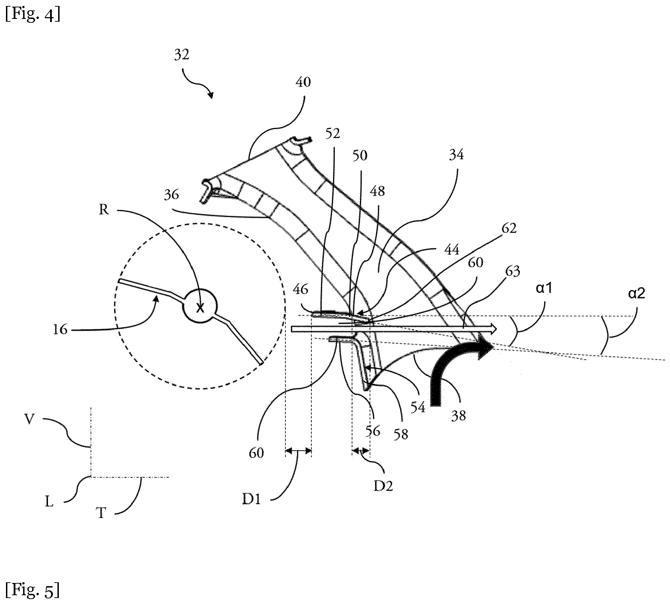

As shown in figure 4, which is a section of the baffle 32 according to a section plan P shown in figure 3, a first dimension D1 measured between the free edge 46 of the deflector 44 and the free end 28 of the flap 16 is comprised between 2mm and 10mm. The dimension of D1 is strictly smaller than 10mm to control the quantity of a cold air underneath the deflector. In other words, the free edge 46 of the deflector 44 is not in contact with any free end 28 of the flap 16, whatever the position of the flap 16 is, but is near this free end 28. It is important to understand that the dimension D1 should not be too important to control the quantity of the cold air.

In addition, a second dimension D2 measured between an intersection of the front face 36 of the channels 34 with the deflector and a free extremity 62 of the deflector 44 is smaller than 5mm, each dimension Di, D2 being measured along parallel directions.

The deflector 44 of the baffle 32 forces the circulation of the portion 63 of the second part of the cold air flow over the heat exchanger 12, and more precisely, toward a zone wherein the first part of the air flow circulates downstream of the heat exchanger 12. It is understood that the second part of the air flow guided by the deflector 44 is at least partially mixed with the first part of the air flow, but in a quantity which is different from the prior art. This clever disposition optimizes the temperature management of the air flow between two different air outlets.

As shown in figures 3 to 5, the deflector 44 comprises at least a proximal portion 50 and a distal portion 52 extending in secant planes. In other words, the proximal portion 50 extends in a first plane whereas the distal portion 52 extends in a second plane, the first plane and the second plane being secant to each other. Moreover, the first and the second planes, in which respectively extend the proximal portion 50 and the distal portion 52 extending, are parallel to a main extending axis of the deflector 44, the last one being parallel to the longitudinal axis L.

Furthermore, it is understood by "proximal portion 50" the portion of the deflector 44 in contact with at least the channels 34, and by "distal portion 52" the portion comprising the free edge 46.

According to the invention, the planes, in which respectively extend the portions of the deflector 44, form a first angle α1 whose value is between -10° and +10°.

In another embodiment, the deflector 44 comprises a curve profile. The curve profile is present in a section of the deflector 44 perpendicular to the main extending axis of the said deflector 44.

As shown in figure 3 to 5, the baffle 32 comprises a support 54 having a complementary shape of a wall of the housing 2. It is understood that the support 54 cooperates with at least this wall of the housing 2 to properly position the baffle 32 into the mixing area 14 of the housing 2. The wall that receive the support 54 may be a section of the housing 2 that attaches the heat exchanger 12, an electrical heater, an inner condenser or a combination of thereof. Advantageously, the said wall defines at least in part on one hand the heat air circuit 20 and on the other hand the cold air circuit 22.

More precisely, the support 54 is dedicated to position the baffle 32 with respect to the flap 16 too. The support 54 assures to the free edge 46 of the deflector 44 to be at a distance from the flap 16.

The support 54 comprises a first wall 56 extending in the first plane and a second wall 58 extending in another plane secant to the first plane, each plane being parallel to a main extension axis of the support 54. The main extension axis of the support 54 corresponding to the biggest dimension of the support 54.

As shown more particularly in figure 4, the first wall 56 extends in a first plane, the proximal portion 50 of the deflector 44 extending in a second plane, the first plane and the second plane forming a second angle α2 being between -5° and +5°. However, the first plane and the second plane can be distinct and parallel to each other.

The support 54 is located at the proximal opening 38 of the channels 34. More particularly, the support 54 is vertically disposed between the deflector 44 and the proximal opening 38.

The support 54 extends from the front face 36 of the channels 34 towards the flap 16. In other words, the first wall 56 of the support 54 extends from the front face 36 to the flap 16, the second wall 58 extends along the plane in which the front face 36 extends, or parallel to this plane.

The support 54, or a housing of the heating, ventilating and/or air-conditioning system, and the deflector 44 form a canal 60 through which the portion 63 of the second part of the air flow circulates. This advantage allows to adjust the temperature difference between the windshield air outlets 6 and the vent air outlet 10 very easily.

According to the invention, the heating, ventilating and/or air-conditioning system 1 may comprise at least two baffles 32 symmetrical to each other with respect to a partition wall located in the housing 2 of the heating, ventilating and/or air-conditioning system 1. For instance, this configuration could be really advantageous to divide the thermal regulation of the air flow for the driver and for the passengers.

The invention shall not, however, be limited to the means and configurations described and illustrated herein, and shall also extend to any equivalent means or configuration described and illustrated herein, and to any technical combination operating such means.

## Claims

1. A heating, ventilating and/or air-conditioning system (1) for a vehicle adapted for a circulation of an air flow, comprising at least an air inlet (4) and two air outlets (6, 8), a heat exchanger (12) configured to exchange heat between at least a first part of the air flow and a fluid, a mixing area (14) configured to mix the first part of the air flow with a second part of the air flow and located between the air inlet (4) and the air outlets (6, 8), a flap (16) located between the air inlet (4) and the mixing area (14) and configured to control the circulation of the second part of the air flow toward the mixing area (14), the heating, ventilating and/or air-conditioning system (1) comprising a baffle (32) located through the mixing area (14), the baffle (32) comprising at least channels (34) extending between the heat exchanger (12) and a first air outlet (6), the channels (34) participate to delimit at least a conduit (42) extending toward a second air outlet (10), the channels (34) comprising a front face (36) facing the flap (16), the baffle (32) comprising at least a deflector (44) extending toward the flap (16), the deflector (44) comprising a free edge (46) located between the flap (16) and the front face (36) of the channels (34), the deflector (44) participating to delimit a canal (60) that guides a portion (63) of the second part of the air flow, said portion (63) of the second part of the air flow being directed toward the second air outlet (10).

2. The heating, ventilating and/or air-conditioning system (1) according to the preceding claim, wherein the baffle (32) comprises a support (54) extending in a first plane starting from the front face (36) of the channels (34) and toward the flap (16), the deflector (44) extending in a second plane distinct from the first plane.

3. The heating, ventilating and/or air-conditioning system (1) according to the preceding claim, wherein the support (54) is dedicated to position the baffle (32) with respect to the flap (16).

4. The heating, ventilating and/or air-conditioning system (1) according to any of preceding claims, wherein the deflector (44) comprises at least a proximal portion (50) and a distal portion (52) extending in secant planes.

5. The heating, ventilating and/or air-conditioning system (1) according to the preceding claim, wherein the planes, in which respectively extend the portions of the deflector (44), form an angle whose value is between -10° and +10°.

6. The heating, ventilating and/or air-conditioning system (1) according to any of claims 1 to 3, wherein the deflector (44) comprises a curve profile.

7. The heating, ventilating and/or air-conditioning system (1) according to any of the preceding claims, wherein a dimension (D2) measured between the free edge (46) of the deflector (44) and a free edge (28) of the flap (16) is between 2 and 10 mm.

8. The heating, ventilating and/or air-conditioning system (1) according to any of the preceding claims in combination with claim 4, wherein the baffle (32) comprises a wall (56) participating at least in part to delimit the canal (60) with the deflector (44) , said wall (56) extending in a first plane, the proximal portion (50) of said deflector (44) extending in a second plane, the first plane and the second plane forming an angle being between -5° and +5°.

9. The heating, ventilating and/or air-conditioning system (1) according to any of the preceding claims, wherein the channels (34) present a proximal opening (38) located next to the heat exchanger (12) and a distal opening (40) located next to the first air outlet (6), the deflector (44) being located closer to the proximal opening (38) than to the distal opening (40).

10. The heating, ventilating and/or air-conditioning system (1) according to any of the preceding claims, wherein the heat exchanger (12) is a first heat exchanger (12) configured to heat the air flow, the heating, ventilating and/or air-conditioning system (1) comprising a second heat exchanger (18) configured to cool the air flow.

11. The heating, ventilating and/or air-conditioning system (1) according to the preceding claim, comprising a heat air circuit (20) through which the first heat exchanger (12) is located and a cold air circuit (22) through which the flap (16) is located and that surrounds the first heat exchanger (12), the heat air circuit (20) and the cold air circuit (22) comprising a shared wall (61), the deflector (44) participating with the shared wall (61) to delimit the canal (60) configured to guide the portion (63) of the second part of the air flow passing through the cold air circuit (22) toward the second air outlet (10).

12. The heating, ventilating and/or air-conditioning system (1) according to any of preceding claim, wherein the deflector (44) comprises a free extremity (62) which is in a common line with the front face (36) of the channels (34).

13. The heating, ventilating and/or air-conditioning system (1) according to any of claims 1 to 11, wherein the deflector (44) comprises a free extremity (62) located between the channels (34).
